# EUROPÄISCHE PATENTSCHRIFT

(11) **EP 1 214 617 B1**
(45) Veröffentlichungstag und Bekanntmachung des Hinweises auf die Patenterteilung: **23.04.2003**
(21) Anmeldenummer: 00967577.8
(22) Anmeldetag: 11.09.2000
(51) Int. Cl.: G02B 6/38

(54) **OPTISCHER STECKVERBINDER**
OPTICAL PLUG-IN CONNECTOR
CONNECTEUR A FICHE OPTIQUE

(30) Priorität: 09.09.1999 DE 19944895
(43) Veröffentlichungstag der Anmeldung: 19.06.2002
(73) Patentinhaber: Infineon Technologies AG, 81669 München (DE)
(72) Erfinder: SCHULZ, Klaus, 12309 Berlin (DE); MELCHIOR, Lutz, 12559 Berlin (DE)
(74) Vertreter: Müller, Wolfram Hubertus, Dipl.-Phys.
(86) Internationale Anmeldenummer: DE0003198
(87) Internationale Veröffentlichungsnummer: WO01018571

(56) Entgegenhaltungen:
- EP-A- 0 456 298
- EP-A- 0 618 468
- US-A- 4 762 388
- US-A- 4 798 430
- US-A- 5 233 674
- PATENT ABSTRACTS OF JAPAN vol. 012, no. 233 (P-724), 5. Juli 1988 (1988-07-05) & JP 63 026608 A (OPTIC DAIICHI DENKO CO LTD), 4. Februar 1988 (1988-02-04)

## Beschreibung

Die Erfindung liegt auf dem Gebiet der optischen Steckverbindertechnik, mit der optisch zu koppelnde Lichtwellenleiterenden (lösbar) verbunden werden. Üblicherweise werden zu koppelnde Lichtwellenleiterenden in präzisen Halterungen, beispielsweise Steckerstiften (auch Ferrulen genannt), gehalten. Die Stirnfläche des Lichtwellenleiters ist in der Halterung kopplungsfähig positioniert und mittels der präzisen Halterung auf ihren Kopplungspartner (z. B. ein weiteres Lichtwellenleiterende) hochgenau ausgerichtet. Es sind sowohl Halterungen bekannt, die jeweils ein einzelnes Lichtwellenleiterende aufnehmen, als auch Halterungen für eine Vielzahl von Lichtwellenleiterenden.

Die Erfindung bezieht sich auf einen optischen Steckverbinder mit einer in Steckrichtung verlaufenden Hauptachse, mindestens einem Lichtwellenleiterende und mindestens einem Verriegelungsteil mit einem Rastelement.

Ein derartiger Steckverbinder geht aus der DE 38 18 717 C2 hervor und umfaßt ein Steckverbindergehäuse, das an seinem kopplungsseitigen Ende zwei Steckerstifte lagert. Von den Steckerstiften sind Lichtwellenleiterenden derart aufgenommen, daß deren Stirnflächen mit den Stirnflächen der Steckerstifte abschließen.

An den Schmalseiten des Gehäuses sind jeweils Verriegelungshebel (Verriegelungsteile) mit je einem nach außen weisenden Rastelement vorgesehen. Die Verriegelungsteile sind an das frontseitige Ende des Gehäuses unmittelbar angespritzt, so daß ihre rückwärtigen Enden federnd auslenkbar sind. Im verbundenen Zustand verrasten die Rastelemente mit Rastpartnern (Verriegelungsposition), die als Verriegelungslaschen an einer den Steckverbinder aufnehmenden Aufnahme oder Steckbuchse ausgebildet sein können. Die Verriegelung dient zur mechanischen Fixierung des Steckverbindergehäuses und bedarfsweise als Gegenlager für Kontaktkräfte zwischen den Steckerstiften und den Lichtwellenleiterenden zugeordneten Kopplungspartnern. Üblicherweise werden nämlich die Steckerstifte beispielsweise durch eine Feder mit einer Vorspannung beaufschlagt, um im verbundenen und gesteckten Zustand unmittelbaren festen körperlichen Kontakt mit dem jeweiligen Kopplungspartner zu haben.

Um die Steckverbindung bedarfsweise lösen zu können, haben die Verriegelungsteile rückwärtige Betätigungszonen. Bei manuellem Druck auf die Betätigungszonen bewegen sich die Verriegelungsteile aufeinander zu (Freigabeposition), so daß die Rastelemente außer Eingriff mit ihrer jeweiligen Verriegelungslasche geraten.

Bei benachbarter Anordnung mehrerer derartiger Steckverbinder ist jedoch im Hinblick auf den vorbeschriebenen Lösungsmechanismus beiderseits der Schmalseiten ein ausreichender Raum vorzusehen, um die Verriegelungsteile. betätigen zu können.

Aus der EP 0 618 468 A1 ist eine Schnittstelle zwischen einem Lichtleiter und einem integrierten Schaltkreis bekannt. Eine Keilnutpaarung ermöglicht, den Lichtwellenleiter innerhalb des Schaltkreises zu positionieren und mittels eines Schnapphakens zu verriegeln. Zur Freigabe des Lichtwellenleiters ist der Schnapphaken einstückig mit einem Hebel ausgebildet, so dass der Schnapphaken bei Betätigung des Hebels aus der Verriegelungsposition gekippt wird. Für eine exakte Positionierung muss die Keilnutpaarung mit sehr engen Toleranzen gefertigt werden, so dass kein Spiel entsteht, das durch den Angriffspunkt des Schnapphakens zu einer Depositionierung des Leichtwellenleiterendes führen würde.

Die Aufgabe der Erfindung besteht in der Schaffung eines Steckverbinders, der manuell aus einem mit einem Kopplungspartner verbundenen Zustand gelöst werden kann und eine sehr dichte Anordnung benachbarter Steckverbinder erlaubt.

Diese Aufgabe wird erfindungsgemäß bei einem Steckverbinder der eingangs genannten Art durch ein Betätigungselement gelöst, das bei Betätigung das Rastelement aus einer Verriegelungsposition in eine Freigabeposition bewegt, wobei zum einen die Bewegungsrichtung des Betätigungselements imwesentlichen senkrecht zur Hauptachse verläuft und verschieden von der Bewegungsrichtung des Rastelements ist und zum anderen das Betätigungselement separat von dem Verriegelungsteil ausgebildet ist und dabei beide an einem Gehäuse des Steckverbinders angeordnet sind.

Ein wesentlicher Aspekt des erfindungsgemäßen Steckverbinders besteht darin, daß eine Funktionstrennung und eine Bewegungstrennung zwischen dem der Verriegelung dienenden Rastelement einerseits und dem zur Bewegung des Verriegelungsteils bzw. des Rastelements dienenden Betätigungselement andererseits vorgesehen ist. Die Funktion des Entriegelns wird durch Betätigung des separaten Betätigungselements realisiert. Dabei ist die Bewegungsrichtung des Betätigungselements von der Bewegungsrichtung des Rastelements verschieden. Dies erlaubt eine von der Ausbildung des Verriegelungsteils unabhängige Anordnung des Betätigungselements, das dadurch in einer Position angeordnet sein kann, die im verbundenen Zustand gut zugänglich ist und keinen kritischen Bauraum erfordert.

Eine mechanisch bevorzugte Ausgestaltung des erfindungsgemäßen Steckverbinders sieht vor, daß die Bewegungsrichtungen von Betätigungselement und Rastelement im wesentlichen rechtwinklig zueinander sind.

Die Federeigenschaften der Verriegelungsteile und die Auslegung der Verriegelung können zu Querkräften führen, die ungünstigstenfalls eine Tendenz zum Verkippen des Steckverbinders und damit der Lichtwellenleiterenden fördern. Um dem entgegenzuwirken ist nach einer vorteilhaften Weiterbildung der Erfindung vorgesehen, daß der Steckverbinder zwei symmetrisch angeordnete verriegelungsteile mit je einem Rastelement aufweist und das Betätigungselement beide Rastelemente bewegt.

Eine fertigungstechnisch bevorzugte Ausgestaltung des erfindungsgemäßen Steckverbinders sieht vor, daß das Betätigungselement und das Verriegelungsteil oder die Verriegelungsteile kragträgerartig an dem Steckverbinder oder an einem Gehäuse des Steckverbinders befestigte federnde Hebel sind.

Eine besonders platzsparende und gut zugängliche Anordnung des Betätigungselements ist nach einer bevorzugten Fortbildung der Erfindung gegeben, wenn das Betätigungselement im Bereich der Deckseite des Steckverbinders angeordnet ist.

Die Einwirkung des Betätigungselements auf das oder die Verriegelungsteile zur Bewegung der Rastelemente läßt sich verschieden realisieren; beispielsweise können Mitnehmer an dem Betätigungselement vorgesehen sein, die mit entsprechenden Führungen oder Kulissen an den Verriegelungsteilen zusammenwirken. Eine diesbezüglich mechanisch bevorzugte Ausgestaltung der Erfindung sieht vor, daß das Betätigungselement und das Verriegelungsteil oder die Verriegelungsteile kooperierende schiefe Ebenen aufweisen.

Ein Ausführungsbeispiel der Erfindung wird nachfolgend anhand einer Zeichnung weiter erläutert; es zeigen:
Figur 1 einen erfindungsgemäßen Steckverbinder in perspektivischer Ansicht und
Figur 2 in starker Vergrößerung ein Verriegeiungsteil und ein Betätigungselement.

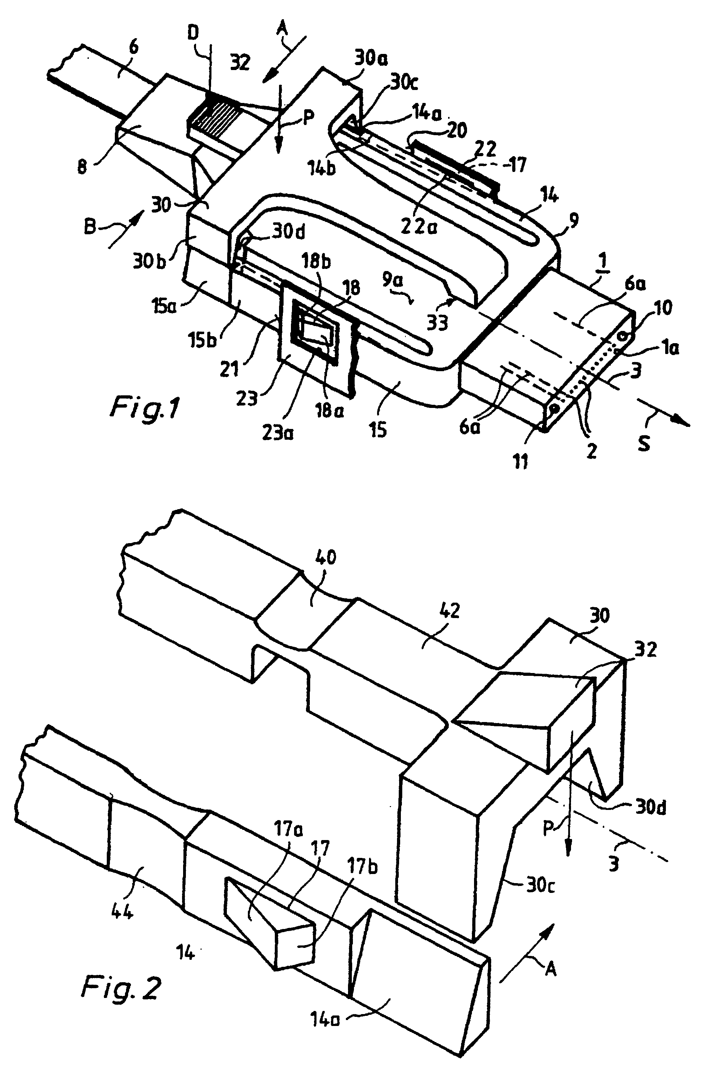

Nach Figur 1 umfaßt der Steckverbinder eine Halterung oder Ferrule 1 mit einer Vielzahl von axialen Längsbohrungen 2, die parallel zur Hauptachse 3 des Steckverbinders verlaufen. Mit der Hauptachse 3 fällt auch die Steckrichtung S zusammen, in der der Steckverbinder in eine nicht näher dargestellte Aufnahme einsteckbar ist. Die Axialbohrungen 2 nehmen Enden 6a von Lichtwellenleitern 6 auf, die rückwärtig durch eine Knickschutztülle 8 in ein Gehäuse 9 des Steckverbinders eintreten. Die Enden 6a schließen mit ihrer jeweiligen kopplungsseitigen Fläche mit der Stirnfläche 1a der Halterung 1 kopplungsfähig ab. Beiderseits der Reihe von Lichtwellenleiterenden sind Zentrierbohrungen 10, 11 vorgesehen, mit denen die Halterung 1 präzise in Bezug auf die Kopplungspartner der Lichtwellenleiterenden 6a ausgerichtet wird.

An den Schmalseiten des Gehäuses 9 sind symmetrisch Verriegelungsteile 14, 15 angeformt, an deren freien Enden 14b, 15b schiefe Ebenen 14a, 15a ausgeformt sind. Auf den äußeren Flanken der Verriegelungsteile ist jeweils ein Rastelement 17, 18 ausgebildet. Das Rastelement ist in an sich bekannter Weise mit einer Auflaufschräge 17a, 18a versehen. Beim Einführen des Steckverbinders in Steckrichtung S in die nicht näher dargestellte Aufnahme gelangen die Auflaufschrägen 17a, 18a in Kontakt mit Kanten 20, 21 von Verriegelungslaschen 22, 23. Die Verriegelungslaschen 22, 23 können Teil der Aufnahme sein und haben jeweils ein Verriegelungsfenster 22a, 23a. Beim Einführen werden die Verriegelungsteile zunächst aufeinander zu bewegt, so daß die Rastelemente an den Verriegelungslaschen 22, 23 langgleiten, bis sie durch das jeweilige Verriegelungsfenster 22a, 23a hindurchtreten. Durch Anschlag ihrer rückwärtigen Anschlagfläche 17b, 18b an der anliegenden Kante des jeweiligen Verriegelungsfensters verriegeln die Rastelemente und sichern den Steckverbinder dadurch gegen ein Herausziehen entgegen der Steckrichtung S (Verriegelungsposition).

Über der Gehäuseoberseite, die die Deckseite 9a des Steckverbinders bildet, ist ein Betätigungselement 30 angeordnet. Das Betätigungselement kann an einem oberen Deckel des Gehäuses 9 angespritzt sein. Im Ausführungsbeispiel hat das Betätigungselement einen rückwärtig angeformten Betätigungshebel 32 mit einer Grifffläche. Selbstverständlich kann das Betätigungselement auch separat gefertigt und erst dann mit der Oberseite des Steckverbindergehäuses 9 verbunden werden, wobei das Betätigungselement von einem Verbindungsbereich 33 mit dem Gehäuse 9 ausgehend rückwärtig als kragträgerartiger, federnder Hebel ausgebildet ist.

Um den Steckverbinder aus dem in Figur 1 dargestellten verbundenen Zustand wieder zu lösen, müssen die Rastelemente 17, 18 außer Eingriff mit dem jeweiligen Verriegelungsfenster 22a, 23a (Freigabeposition) gebracht werden. Dazu wird im wesentlichen senkrecht zur Hauptachse 3 eine Druckkraft D auf den Betätigungshebel 32 ausgeübt. Damit bewegt sich das Betätigungselement 30 in Richtung des Pfeiles P senkrecht zur Hauptachse 3 bzw. zur Steckrichtung S auf die Deckseite 9a zu. Das Betätigungselement ist als Querbalken ausgebildet und an seinen jeweiligen Balkenenden 30a, 30b mit schiefen Ebenen (Kontaktschrägen) 30c, 30d versehen. Beim Niederdrücken des Betätigungselements 30 gelangen die Kontaktschrägen 30c, 30d mit kooperierenden Kontaktschrägen 14a, 15a an den freien Enden 14b, 15b der kragträgerartigen Verriegelungsteile 14, 15 in Kontakt. Beim weiteren Niederdrücken gelangt über die Wechselwirkung der schiefen Ebenen bzw. Schrägen 30c, 14a und 30d, 15a die Druckkraft D auf die Schrägen 14a, 15a und bewegt die Enden 14b, 15b der Verriegelungsteile in Bewegungsrichtung A, B aufeinander zu, bis die Außenflanken der Verriegelungsteile die gestrichelt angedeutete Position einnehmen. In dieser Position sind die Rastelemente in der Freigabeposition (außer Eingriff mit den zugeordneten Verriegelungsfenstern), so daß der Steckverbinder entgegen der Steckrichtung S rückwärtig abgezogen werden kann.

Figur 2 zeigt in starker Vergrößerung das Betätigungselement 30 mit der Betätigungszone 32 und den innenseitigen Schrägen 30c, 30d. Dabei ist erkennbar, daß die Bewegungsrichtung P senkrecht zur Hauptachse 3 verläuft. Die federnde Beweglichkeit des Betätigungselements in Bewegungsrichtung P kann durch eine Verjüngung 40 im hinteren Bereich eines Haltebalkens 42, der an der Deckseite 9a (Figur 1) gelagert ist, verbessert werden. Figur 2 zeigt aus Darstellungsgründen nur ein Verbindungsteil 14, dessen Federeigenschaften ebenfalls durch Materialverjüngungen 44 zum Verbindungsbereich mit dem Gehäuse 9 eingestellt werden können. Die schräge Fläche 14a ist aus Darstellungsgründen erheblich beabstandet von der Fläche 30c gezeigt. Bei Betätigung des Betätigungselements 30 sind jedoch die Flächen 14a, 30c wie vorbeschrieben in Wirkkontakt, so daß sich das Verriegelungsteil 14 in Bewegungsrichtung B senkrecht zur Bewegungsrichtung P bewegt.

Bei der dargestellten Konstruktion führen die Verriegelungsteile tatsächlich Schwenkbewegungen um ihren Verbindungspunkt (virtueller Drehpunkt) mit dem Gehäuse aus. Auch dies ist aber als eine Bewegung anzusehen, die im Sinne der vorliegenden Erfindung senkrecht zur Hauptachse des Steckverbinders verläuft. Hauptsächlich kommt es auf eine Bewegungskomponente an, die senkrecht zur Hauptachse ist, so daß auch von der Senkrechten abweichende oder bogenförmige Bewegungen als im wesentlichen senkrecht zur Hauptachse anzusehen sind.

Besonders vorteilhaft ist bei dem dargestellten Ausführungsbeispiel die symmetrische Anordnung der Rastelemente, die eine im wesentlichen querkraftfreie Aufnahme des Steckverbinders ermöglicht. Das zusätzliche Element (Betätigungselement) kann bedarfsweise die Verriegelungsteile bewegen und damit die Rastelemente aus der Verriegelungsposition (Figur 1) in die Freigabeposition überführen. Durch die funktionale Trennung von Verriegelung einerseits und Betätigung der Verriegelungsteile andererseits ist ein größerer Gestaltungsspielraum hinsichtlich der Betätigung geschaffen. Vorteilhafterweise kann das Betätigungselement im Bereich der Deckseite 9a angeordnet sein. Nach dem Entriegelungsvorgang wird das Betätigungselement wieder losgelassen und federt ebenso wie die Verriegelungsteile in die ursprüngliche Lage (Verriegelungsposition) zurück.

## Patentansprüche

1. Optischer Steckverbinder mit:
einer in Steckrichtung (S) verlaufenden Hauptachse (3), mindestens einem Lichtwellenleiterende (6a), mindestens einem Verriegelungsteil (14) mit einem Rastelement (17), und mit einem separat von dem Verriegelungsteil (14) ausgebildeten Betätigungselement (30), dessen Bewegungsrichtung (P) im wesentlichen senkrecht zur Hauptachse (3) verläuft und verschieden von der Bewegungsrichtung (A) des Rastelements (17, 18) ist
**dadurch gekennzeichnet, daß**
das Betätigungselement (30) und das Verriegelungsteil (14) beide an einem Gehäuse (9) des Steckverbinders angeordnet sind und das Betätigungselement (30) bei Betätigung das Rastelement (17) aus einer Verriegelungsposition in eine Freigabeposition bewegt.

2. Steckverbinder nach Anspruch 1,
**dadurch gekennzeichnet, daß**
die Bewegungsrichtungen (P;A) von Betätigungselement (30) und Rastelement (17) im wesentlichen rechtwinklig zueinander sind.

3. Steckverbinder nach Anspruch 1 oder 2,
**dadurch gekennzeichnet, daß**
der Steckverbinder zwei symmetrisch angeordnete Verriegelungsteile (14, 15) mit je einem Rastelement (17,18) aufweist und das Betätigungselement (30) beide Rastelemente bewegt.

4. Steckverbinder nach einem der vorangehenden Ansprüche,
**dadurch gekennzeichnet, daß**
das Betätigungselement (30) und das Verriegelungsteil (14) oder die Verriegelungsteile (14,15) kragträgerartig an dem Steckverbinder oder an einem Gehäuse (9) des Steckverbinders befestigte federnde Hebel sind.

5. Steckverbinder nach einem der vorangehenden Ansprüche,
**dadurch gekennzeichnet, daß**
das Betätigungselement (30) im Bereich der Deckseite (9a) des Steckverbinders angeordnet ist.

6. Steckverbinder nach einem der vorangehenden Ansprüche,
**dadurch gekennzeichnet, daß**
das Betätigungselement (30) und das Verriegelungsteil (14) oder die Verriegelungsteile (14,15) kooperierende schiefe Ebenen (14a,30c;15a,30d) aufweisen.

## Claims

1. Optical plug-in connector with:
a main axis (3) running in the plugging direction (S), at least one optical waveguide end (6a), at least one locking part (14) with a detent element (17), and with an actuating element (30) which is formed separately from the locking part (14) and the direction of movement (P) of which runs substantially perpendicular to the main axis (3) and is different from the direction of movement (A) of the detent element (17, 18),
**characterized in that**
the actuating element (30) and the locking part (14) are both arranged on a housing (9) of the plug-in connector, and the actuating element (30) moves the detent element (17) from a locking position into a release position when it is actuated.

2. Plug-in connector according to Claim 1,
**characterized in that** the directions of movement (P; A) of the actuating element (30) and detent element (17) are substantially at right angles to each other.

3. Plug-in connector according to Claim 1 or 2,
**characterized in that** the plug-in connector has two symmetrically arranged locking parts (14, 15) each with a detent element (17, 18) and the actuating element (30) moves both detent elements.

4. Plug-in connector according to one of the preceding claims, **characterized in that** the actuating element (30) and the locking part (14) or the locking parts (14, 15) are resilient levers fastened to the plug-in connector or to a housing (9) of the plug-in connector in the manner of cantilever beams.

5. Plug-in connector according to one of the preceding claims, **characterized in that** the actuating element (30) is arranged in the region of the top side (9a) of the plug-in connector.

6. Plug-in connector according to one of the preceding claims, **characterized in that** the actuating element (30) and the locking part (14) or the locking parts (14, 15) have cooperating inclined planes (14a, 30c; 15a, 30d).

## Revendications

1. Connecteur optique à fiche comprenant :
un axe (3) principal s'étendant dans une direction (S) d'enfichage, au moins une extrémité (6a) de guide d'ondes de lumière, au moins une pièce (14) de verrouillage ayant un élément (17) d'encliquetage et un élément (30) d'actionnement qui est constitué de manière distincte de la pièce (14) de verrouillage, dont la direction (P) de déplacement est sensiblement perpendiculaire à l'axe (3) principal et est différente de la direction (A) de déplacement de l'élément (17, 18) d'encliquetage,
**caractérisé en ce que** l'élément (30) d'actionnement et la pièce (14) de verrouillage sont disposés tous deux sur un boîtier (9) du connecteur à fiche et l'élément (30) d'actionnement déplace lors de l'actionnement l'élément (17) d'encliquetage d'une position de verrouillage à une position de libération.

2. Connecteur à fiche suivant la revendication 1,
**caractérisé en ce que** les directions (P ; A) de déplacement de l'élément (30) d'actionnement et de l'élément (17) d'encliquetage sont sensiblement perpendiculaires entre elles.

3. Connecteur à fiche suivant la revendication 1 ou 2,
**caractérisé en ce que** le connecteur à fiche a deux pièces (14, 15) de verrouillage disposées de manière symétrique et ayant chacune un élément (17, 18) d'encliquetage et **en ce que** l'élément (30) d'actionnement déplace les deux éléments d'encliquetage.

4. Connecteur à fiche suivant l'une des revendications précédentes,
**caractérisé en ce que** l'élément (30) d'actionnement et la pièce (14) de verrouillage ou les pièces (14, 15) de verrouillage sont des leviers à effet élastique de type à porte-à-faux fixés sur le connecteur à fiche ou sur un boîtier (9) du connecteur à fiche.

5. Connecteur à fiche suivant l'une des revendications précédentes,
**caractérisé en ce que** l'élément (30) d'actionnement est disposé dans la zone de la face (9a) supérieure du connecteur à fiche.

6. Connecteur à fiche suivant l'une des revendications précédentes,
**caractérisé en ce que** l'élément (30) d'actionnement et la pièce (14) de verrouillage ou les pièces (14, 15) de verrouillage ont des plans (14a, 30c ; 15a, 30d) inclinés qui coopèrent.
